# EUROPÄISCHE PATENTSCHRIFT

(11) **EP 4 049 023 B1**
(45) Veröffentlichungstag und Bekanntmachung des Hinweises auf die Patenterteilung: **27.11.2024**
(21) Anmeldenummer: 20801169.2
(22) Anmeldetag: 21.10.2020
(51) Int. Cl.: G01N 17/04

(54) **VERFAHREN ZUR ERMITTLUNG EINER SULFATIERUNGSLEISTUNG IN RAUCHGAS**
METHOD FOR DETERMINING A SULFATION OUTPUT IN FLUE GAS
PROCÉDÉ POUR DÉTERMINER UNE CAPACITÉ DE SULFATATION DANS DES GAZ DE FUMÉES

(30) Priorität: 22.10.2019 DE 102019128549
(43) Veröffentlichungstag der Anmeldung: 31.08.2022
(73) Patentinhaber: CheMin GmbH, 86167 Augsburg (DE)
(72) Erfinder: KAISER, Marie, 86167 Augsburg (DE); SPIEGEL, Wolfgang, 86167 Augsburg (DE); SCHNEIDER, Dominik, 86167 Augsburg (DE)
(74) Vertreter: Schlosser, Martin
(86) Internationale Anmeldenummer: PCT/EP2020/079604
(87) Internationale Veröffentlichungsnummer: WO 2021/078789

(56) Entgegenhaltungen:
- EP-A1- 1 847 278
- CN-U- 206 906 253
- JP-A- H0 894 530
- US-A1- 2007 119 352
- "Energie aus Abfall, Band 12", 2015, TK VERLAG KARL THOMÉ-KOZMIENSKY, ISBN: 978-3-944310-18-3, article SPIEGEL WOLFGANG ET AL: "Korrosionsschutz und Werkstoffwahl in Abfallverbrennungsanlagen, Ersatzbrennstoff-Kraftwerken und Biomasseanlagen", pages: 223 - 240, XP055790792
- SPIEGEL WOLFGANG: "Hochtemperatur-Korrosion in MVA, Biomasse-und EBS-Kraftwerken", November 2009 (2009-11-01), XP055791051, Retrieved from the Internet <URL:https://tu-dresden.de/ing/maschinenwesen/iet/ressourcen/dateien/kwt/lehre/stubi/Korrosion_Spiegel.pdf?lang=en>
- KÖNIG R: "ZUR BESCHRÄNKUNG DES ANSPRUCHSINHALTS DURCH "BAR"-DERIVATE", MITTEILUNGEN DER DEUTSCHEN PATENTANWÄLTE, HEYMANN, KÖLN, DE, 1997, pages 62, XP001248632, ISSN: 0026-6884

## Beschreibung

Die Erfindung betrifft ein Verfahren zur Ermittlung einer Sulfatierungsleistung in Rauchgas.

Rauchgase entstehen typischerweise bei der Verbrennung von Brennstoffen. Beispielsweise kann es sich dabei um fossile Brennstoffe wie Kohle, Öl oder Gas, nachwachsende Brennstoffe wie Biomasse oder um Abfall und abfallähnliche Brennstoffe, wie z.B. Klärschlamm oder Nebenprodukte von Industrieprozessen handeln. Derartige Brennstoffe werden regelmäßig in Kraftwerken verbrannt, um die dabei entstehende Wärme zu nutzen, beispielsweise zum Antrieb dampfbetriebener Turbinen oder zur Gewinnung von Fernwärme. Rauchgase entstehen auch bei der thermischen Behandlung von Stoffen, wie z.B. Recycling von Metallen. Auch bei diesen Prozessen kann die entstehende Wärme in einem nachgeschalteten Kessel energetisch genutzt werden.

Rauchgase haben häufig eine sehr hohe Temperatur von mehreren 100 °C und enthalten häufig aggressive chemische Substanzen, beispielsweise Halogensalze. Bei Verwendung von Biomasse als Brennstoff entsteht beispielsweise häufig Kaliumchlorid (KCl). Bei Verwendung von Abfall, beispielsweise üblicher Haushaltsabfall, als Brennstoff entstehen beispielsweise Natriumchlorid (NaCl), Calciumchlorid (CaCl₂), Bleichlorid (PbCl₂) und Zinkchlorid (ZnCl₂). Bei Verwendung von Altholz als Brennstoff entstehen beispielsweise Kaliumchlorid (KCl), Bleichlorid (PbCl₂) und Zinkchlorid (ZnCl₂). Außerdem können Mischsalze der verschiedenen Halogensalze auftreten, die ein anderes physikalisches und chemisches Verhalten als die reinen Salze in Bezug auf Korrosionsauswirkungen haben können.

Derartige Substanzen führen zu Korrosion an Materialien, aus welchen der Kessel einschließlich etwaiger Rauchgaszüge aufgebaut ist. Deshalb ist es vorteilhaft, wenn derartige Substanzen möglichst schnell nach einer etwaigen Ablagerung an einer Kesselwand oder auch noch vor deren Ablagerung chemisch zersetzt werden. Es ist bekannt, dass Schwefeltrioxid (SO₃) die genannten und auch andere korrosive Rauchgasbestandteile zersetzen kann, wobei typischerweise aus Salzen des Chlors Sulfate werden, oder allgemeiner aus Halogensalzen andere Salze wie insbesondere Sulfate werden. Insofern ist eine gewisse Menge an Schwefeltrioxid im Rauchgas erwünscht.

Je nach Brennstoff reicht das bei der Verbrennung erzeugte Schwefeltrioxid nicht aus, um Korrosion wirkungsvoll vorzubeugen. Dies liegt insbesondere auch daran, dass die Erzeugung von Schwefeltrioxid in Konkurrenz zur Erzeugung von Schwefeldioxid (SO₂) steht. Es sind deshalb bereits Mechanismen entwickelt worden, welche Schwefeltrioxid dem Rauchgas zuführen oder Schwefeltrioxid im Rauchgas erzeugen können. Damit wird die Sulfatierungsleistung, also die Fähigkeit eines Rauchgases zum Abtransport oder Zersetzen von Halogensalzen, gezielt erhöht.

Es hat sich jedoch als schwierig herausgestellt, eine Sulfatierungsleistung in einem Rauchgas zu messen, was es wiederum erschwert, Vorgehensweisen zur Erzeugung von Schwefeltrioxid und zur Dosierung von Schwefeltrioxid zu bewerten.

Das Dokument US 2007/0119352 A1 offenbart ein Verfahren zum Kontrollieren von Schlacke und Korrosion. Dabei wird ein Ort eines durch Schlacke verursachten Problems ermittelt und mittels geeigneter Chemikalien behoben.

Das Dokument Spiegel Wolfgang et al., "Korrosionsschutz und Werkstoffwahl in Abfallverbrennungsanlagen, Ersatzbrennstoff-Kraftwerken und Biomasseanlagen", Energie aus Abfall, Band 12, TK Verlag Karl Thomé-Kozmiensky, (2015), Seiten 223 - 240, ISBN 978-3-944310-18-3, XP055790792, offenbart Werkstoffsonden zur Untersuchung von Korrosion in Kraftwerken.

Das Dokument Spiegel Wolfgang, "Hochtemperatur-Korrosion in MVA, Biomasse-und EBS-Kraftwerken", (200911), URL: https://tu-dresden.de/ing/maschinenwesen/iet/ressourcen/dateien/kwt/lehre/stubi/Korrosion_Spie gel.pdf?lang=en, XP055791051, offenbart Informationen zu Korrosionsprozessen in Kraftwerken.

Es ist deshalb eine Aufgabe der Erfindung, Möglichkeiten vorzusehen, mittels welchen eine Sulfatierungsleistung ermittelt werden kann. Dies wird erfindungsgemäß durch ein Verfahren gemäß Anspruch 1 erreicht. Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Hierin beschrieben ist eine Sonde zur Ermittlung einer Sulfatierungsleistung in Rauchgas, welche insbesondere im Rahmen des beanspruchten Verfahrens verwendet wird. Die Sonde weist ein Trägermedium auf, welches zweckmäßig an einer Kesselwand befestigbar ist. Die Sonde weist eine Opferschicht auf, welche auf dem Trägermedium außenseitig angeordnet und/oder aufgebracht ist und welche zweckmäßig ein Opfermaterial aus einem Halogensalz enthält.

Mittels einer solchen Sonde kann eine Sulfatierungsleistung einfach ermittelt werden, indem sie beispielsweise in ein Rauchgas eingebracht werden kann und Zustände des Opfermaterials vor und nach dem Kontakt mit dem Rauchgas miteinander verglichen werden können. Da Schwefeltrioxid verantwortlich für die Sulfatierungsleistung ist und Halogensalze angreift, kann aus einer starken Veränderung des Opfermaterials, insbesondere aus einer starken chemischen Umwandlung oder aus einem starken Abtrag des Opfermaterials, auf eine hohe Sulfatierungsleistung geschlossen werden, und umgekehrt. Insbesondere kann eine Umwandlung eines Halogensalzes in ein Sulfat erfolgen, typischerweise bei gleichbleibendem Kation.

Das Kation des Halogensalzes kann insbesondere als Tracer verstanden werden, welcher in das Rauchgas eingebracht wird und typischerweise im Rauchgas selbst nicht oder zumindest nur schwach vorhanden ist. Das Kation bleibt in einer idealen Prozessführung an der Sonde, wird also nicht von der Sonde in das Rauchgas abgegeben und auch nicht vom Rauchgas aus abgelagert. Die Änderung der Verbindung, welche sich im Rauchgas befindet, kann zur Charakterisierung der Sulfatierungsleistung verwendet werden.

Ein Halogensalz als Opfermaterial wird von Schwefeltrioxid wesentlich intensiver als von Schwefeldioxid angegriffen, da bei einer Reaktion von Schwefeldioxid mit einem Halogensalz ein zusätzliches Sauerstoffatom als Reaktand erforderlich ist, um eine stöchiometrisch korrekte Reaktionsgleichung zu erreichen. Die hierin beschriebene Sulfatierungssonde misst somit spezifisch die Sulfatierungsleistung, welche auf Schwefeltrioxid basiert. Dabei kann sich beispielsweise bei Verbrennung fossiler Brennstoffe wie Kohle ein konstantes Verhältnis zwischen Schwefeltrioxid und Schwefeldioxid einstellen, wobei typischerweise erheblich mehr Schwefeldioxid erzeugt wird als Schwefeltrioxid. Bei der Verbrennung von nachwachsenden Brennstoffen wie Biomasse oder von Müll hängt die tatsächlich in Rauchgaszügen vorhandene Menge an Schwefeltrioxid typischerweise nicht nur von der Menge an bei der Verbrennung erzeugtem Schwefeltrioxid ab, sondern auch von eventuell im Brennstoff enthaltenen Chlorsalzen, welche mit dem entstandenen Schwefeltrioxid unmittelbar reagieren, so dass es für eine erwünschte Sulfatierung in Rauchgaszügen nicht mehr zur Verfügung steht. Gerade aufgrund dieser Effekte ist die Möglichkeit zur spezifischen Messung der Sulfatierungsleistung mittels der hierin beschriebenen Sonde besonders vorteilhaft, da auch Veränderungen in der Sulfatierungsleistung aufgrund unterschiedlicher Brennstoffe oder Brennstoffzusammensetzungen erkannt werden können.

Das Trägermedium kann insbesondere dazu ausgebildet sein, die Opferschicht zu tragen. Es ist bevorzugt so ausgebildet, dass es eine große Oberfläche hat. In einem besonders einfachen Fall kann das Trägermedium aber auch beispielsweise so ausgebildet sein, dass es eine einfache Schale, eine Fläche und/oder eine Halterung für das Opfermaterial bereitstellt. Eine Befestigung des Trägermediums an der Kesselwand kann auf unterschiedliche Weise erfolgen. Beispielhafte Ausführungen sind weiter unten beschrieben.

Das Opfermaterial bzw. die Opferschicht ist typischerweise so aufgebracht, dass es mit die Sonde umströmendem Rauchgas in Kontakt kommt. Dies ermöglicht eine Messung der Sulfatierungsleistung, da die Sulfatierungsleistung des Rauchgases unmittelbar auf das Opfermaterial wirkt. Dies kann insbesondere unter einer außenseitigen Anordnung verstanden werden.

Es sei erwähnt, dass anstelle eines Halogensalzes grundsätzlich auch allgemeiner ein Reaktand als Opfermaterial verwendet werden kann, welcher nicht zwingend ein Halogensalz sein muss.

Es sei verstanden, dass es sich bei der Opferschicht typischerweise um eine gezielt aufgebrachte Schicht mit dem Opfermaterial handelt, wobei typischerweise eine Menge des Opfermaterials verwendet wird, so dass nach einer vorgesehenen Zeit, in welcher die Sonde im Rauchgas verbleiben soll, typischerweise immer noch ein Teil des Opfermaterials vorhanden ist. Dies grenzt die hierin beschriebene Sonde insbesondere gegen Komponenten ab, welche Halogensalze absichtlich oder auch unabsichtlich enthalten, welche jedoch für die eben beschriebene und beabsichtigte Verwendung schon aufgrund der zu geringen Menge des enthaltenen Halogensalzes nicht geeignet sind. Anstelle des Begriffs einer Opferschicht und eines Opfermaterials können auch die Begriffe einer Reaktionsschicht und eines Reaktionsmaterials verwendet werden. Letztlich wird dem Rauchgas ein Material angeboten, mit welchem enthaltenes Schwefeltrioxid reagieren kann und welches dabei zumindest partiell und insbesondere unter vollständiger oder zumindest weitgehender Beibehaltung der Kationen in eine andere chemische Verbindung wechselt. Dies ist nicht zu verwechseln mit Opferschichten, welche beispielsweise zum Schutz von anderen Materialien eingesetzt werden. Die Opferschicht ist insbesondere keine sich auflösende Schicht, sondern es finden darin chemische Reaktionen statt, welche die chemische Zusammensetzung verändern.

Die Opferschicht wird insbesondere dem strömenden Rauchgas angeboten.

Das Halogensalz kann insbesondere ein wasserlösliches Halogensalz sein. Dies bietet den Vorteil, dass nach dem Entnehmen einer Sonde aus dem Rauchgas eine Menge des noch vorhandenen Halogensalzes einfach bestimmt werden kann, nämlich indem das Halogensalz in Wasser aufgelöst wird und die vorhandene Menge nasschemisch, spektroskopisch oder mit anderen Methoden bestimmt wird. Beispielsweise kann eine Titrierung zur Bestimmung der Restmenge von Halogensalz erfolgen. Es sei verstanden, dass anstelle eines wasserlöslichen Halogensalzes auch ein Halogensalz verwendet werden kann, welches in einem anderen Lösungsmittel löslich ist. Eine entsprechende Auswertung mit diesem Lösungsmittel ist typischerweise möglich. Unter einer Löslichkeit in einem Lösungsmittel sei dabei insbesondere verstanden, dass sich das jeweilige Halogensalz in Wasser bzw. in dem jeweiligen Lösungsmittel bei typischen Mengenverhältnissen vollständig oder zumindest fast vollständig auflöst. Eine Löslichkeit kann beispielsweise bei Werten einer löslichen Masse des Halogensalzes in einem Volumen des Lösungsmittels von mindestens 300 g/l oder mindestens 350 g/l angenommen werden. Eine Unlöslichkeit oder zumindest faktische oder weitgehende Unlöslichkeit kann beispielsweise bei Werten von höchstens 1 g/l oder höchstens 0,5 g/l angenommen werden. Die Werte können sich beispielsweise auf 20° C oder Raumtemperatur beziehen. Insbesondere kann auch ein Halogensalz verwendet werden, dessen Wert der löslichen Masse des Halogensalzes in einem Volumen Wasser oder eines anderen Lösungsmittels mindestens um einen Faktor 100, 200, 300, 400, 500 oder 1000 größer ist als der entsprechende Wert des zugehörigen Sulfats mit gleichem Kation.

Es sei verstanden, dass die Sonde auch anders ausgewertet werden kann, beispielsweise durch visuelle Beobachtung oder durch Abkratzen von Opferschicht bzw. Opfermaterial, durch Messung einer Gewichtsveränderung der Opferschicht bzw. des Opfermaterials, oder durch Präparation der Opferschicht für eine lichtmikroskopische oder rasterelektronenmikroskopische Untersuchung.

Das Halogensalz kann insbesondere ein Erdalkalihalogenid sein. Derartige Erdalkalihalogenide haben Eigenschaften, welche für die hierin relevante Anwendung vorteilhaft sind, insbesondere erlauben sie eine gute Bestimmung der Sulfatierungsleistung.

Das Halogensalz kann insbesondere Strontium oder Barium als Erdalkalimetall aufweisen. Diese haben insbesondere den Vorteil, dass sie gut lösliche Halogensalze bilden und dass sie nicht oder zumindest nicht besonders giftig sind. Des Weiteren haben sie den Vorteil, dass sie in typischen Rauchgasen kaum vorkommen, so dass eine Störung der Bestimmung der Sulfatierungsleistung nicht zu erwarten ist.

Das Halogensalz kann insbesondere Chlor als Halogenid aufweisen. Dieses hat vorteilhafte Eigenschaften zur Messung der Sulfatierungsleistung, da es insbesondere lösliche Halogensalze bildet und derartige Halogensalze durch Sulfatierung mit Schwefeltrioxid umgewandelt werden, insbesondere in ein entsprechendes Sulfat.

Das Halogensalz kann insbesondere Strontiumchlorid oder Bariumchlorid sein. Derartige Halogensalze haben sich für die hier relevante Anwendung als besonders vorteilhaft erwiesen, da sie nicht oder zumindest nur unwesentlich giftig sind, kaum Störeinflüsse zu erwarten sind und sie aufgrund guter Löslichkeit einfach ausgewertet werden können. Außerdem werden sie bei hoher Sulfatierungsleistung gut umgewandelt, bei niedriger Sulfatierungsleistung dagegen entsprechend weniger.

Es sei verstanden, dass die genannten Ausführungen des Halogensalzes auch miteinander kombiniert werden können. Beispielsweise kann also das Opfermaterial aus mehreren Komponenten bestehen, wobei beispielsweise jede Komponente gemäß einer der eben oder sonst hierin beschriebenen Ausführungen ausgebildet sein kann.

Das Halogensalz kann insbesondere bis zu einer Temperatur von 350°C, 400 °C, 450 °C oder 500°C nichtflüchtig sein, wobei insbesondere ein thermisch bedingter Abtrag der metallischen und/oder kationischen Komponente unterbunden werden soll. Dadurch wird vermieden, dass die metallische und/oder kationische Komponente sich schon aufgrund der anliegenden Temperatur von der Sonde entfernt und damit die Messung verfälscht. Insbesondere kann unter einer nichtflüchtigen Substanz verstanden werden, dass der Dampfdruck bei gegebener Temperatur so klein ist, dass damit keine störenden Abdampfverluste auftreten.

Es sei erwähnt, dass es nicht unbedingt notwendig ist, dass das Halogensalz bis zur Rauchgastemperatur nichtflüchtig ist. Die Sonde ist typischerweise an einer Kesselwand befestigt und ist auf diese Weise schon passiv gekühlt. Zudem oder alternativ dazu kann eine aktive Kühlung vorgesehen sein. Dies sorgt dafür, dass die Opferschicht typischerweise eine Temperatur hat, welche unterhalb der Rauchgastemperatur liegt, was die jeweiligen Dampfdrücke von Materialien verringert.

Bevorzugt weist die Sonde zumindest ein Thermoelement zur Messung einer Temperatur auf. Damit kann eine Temperatur der Sonde in bevorzugter Weise überwacht werden. Dadurch kann die Aussagefähigkeit einer Messung erhöht werden.

Die Sonde kann gemäß einer vorteilhaften Ausführung eine Befestigungseinrichtung zur Befestigung des Trägermediums an der Kesselwand aufweisen. Dadurch kann eine spezielle Einrichtung zur Befestigung an der Kesselwand vorgesehen sein, welche beispielsweise für eine solche Befestigung optimiert sein kann.

Die Befestigungseinrichtung kann insbesondere einen vorstehenden Stift aufweisen, welcher durch ein Loch der Kesselwand durchführbar ist. Dies ermöglicht eine einfache und zuverlässige Befestigung der Sonde an einer Kesselwand. Insbesondere kann die Sonde damit an einem Steg zwischen zwei Rohren eines Wärmetauschers befestigt werden. Auch andere Möglichkeiten zur Anbringung sind jedoch denkbar. Die Befestigungseinrichtung kann auch dazu ausgebildet sein, die Sonde an einer anderen Sonde zu befestigen.

Die Befestigungseinrichtung kann auch integral mit dem Trägermedium ausgebildet sein. Darunter kann insbesondere verstanden werden, dass Befestigungseinrichtung und Trägermedium nicht klar voneinander abgrenzbar sind, sondern ineinander übergehen. Beispielsweise können sie aus dem gleichen Material ausgebildet sein.

Auch unabhängig von einer integralen Ausführung kann die Befestigungseinrichtung aus dem gleichen Material wie das Trägermedium ausgebildet sein. Dies erlaubt beispielsweise eine einfache Herstellung. Auch unterschiedliche Materialien können jedoch verwendet werden.

Die Befestigungseinrichtung kann gemäß einer Ausführung als Befestigungsabschnitt des Trägermediums ausgebildet sein. Hierzu kann beispielsweise der Befestigungsabschnitt ein Bestandteil des Trägermediums sein. Dieser kann insbesondere an eine Befestigung an einer Kesselwand angepasst sein, beispielsweise indem er stiftförmig oder konisch ausgeführt ist.

Der Befestigungsabschnitt kann gemäß einer Ausführung konisch ausgebildet sein. Dies erlaubt beispielsweise eine Anpassung an ein konisch ausgebildetes Loch in einer Kesselwand, insbesondere in einem Steg der Kesselwand. Durch die Verwendung einer solchen konischen Ausführung kann sich, insbesondere im Zusammenspiel mit einem konischen Loch, eine besonders einfach zu realisierende und besonders dichte Abdichtung der Kesselwand mittels des Befestigungsabschnitts ergeben.

Der Befestigungsabschnitt kann beispielsweise zur Opferschicht hin verjüngend ausgebildet sein. Dies kann beispielsweise bedeuten, dass der Befestigungsabschnitt in einer typischen Befestigungssituation innerhalb des Kessels seine größte Ausdehnung hat und mit einem kleineren Abschnitt nach außerhalb der Kesselwand führt. Dadurch kann eine besonders hohe Stabilität innerhalb des Kessels erreicht werden. Auch die umgekehrte Ausführung ist jedoch möglich.

Gemäß einer Ausführung ist die Befestigungseinrichtung als zum Trägermedium abgrenzbares Element ausgebildet. Dies kann insbesondere bedeuten, dass das Trägermedium visuell zur Befestigungseinrichtung abgrenzbar ist. Beispielsweise kann das Trägermedium einen anderen, insbesondere erheblich anderen, Querschnitt aufweisen als die Befestigungseinrichtung und/oder aus einem anderen, insbesondere sichtbar anderen, Material ausgebildet sein. Beispielsweise kann die Befestigungseinrichtung als vom Trägermedium abstehender Stab ausgebildet sein.

Die Befestigungseinrichtung kann insbesondere ganz oder teilweise rohrförmig ausgebildet sein. Dies entspricht einer einfachen und stabilen Ausführung.

Das Trägermedium kann insbesondere eine Aufnahme zum Einführen eines Bolzens zur Befestigung an der Kesselwand aufweisen. Die Aufnahme kann beispielsweise als zumindest einseitig oder genau einseitig offener Hohlraum innerhalb des Trägermediums ausgeführt sein. Eine solche Aufnahme kann beispielsweise als Befestigungseinrichtung betrachtet werden. Der Bolzen kann insbesondere an der Kesselwand, vorzugsweise an einem Steg der Kesselwand, befestigt sein. Somit kann die Sonde beispielsweise durch Aufstecken auf den Bolzen an der Kesselwand befestigt werden.

Gemäß einer Ausführung besteht die Opferschicht vollständig aus dem Opfermaterial. Mit anderen Worten ist in diesem Fall die Opferschicht identisch zum Opfermaterial. Die Opferschicht kann jedoch auch noch weitere Komponenten aufweisen, welche beispielsweise eine Wärmeübertragung verbessern können oder das Verhalten des Opfermaterials beeinflussen können.

Das Trägermedium kann gemäß jeweiligen Ausführungen aus Metall, aus Eisen oder aus Ferrochrom ausgebildet sein. Das Trägermedium kann auch gemäß jeweiligen Ausführungen aus Stahl oder aus Nickel-Chrom-Stahl oder aus einer Nickelbasislegierung ausgebildet sein. Ein Stahl oder eine Legierung kann insbesondere hochlegiert sein. Insbesondere kann somit ein Massenanteil mindestens eines Legierungselements mindestens 5 % betragen. Das Trägermedium kann auch aus Keramik oder aus Graphit ausgebildet sein. Die genannten Materialien haben sich aufgrund ihrer Hitze- und Korrosionsfestigkeit und/oder Korrosionsbeständigkeit als vorteilhaft erwiesen. Beispielsweise kann ein unter dem Namen Inconel bekannter Stahl für das Trägermedium verwendet werden. Insbesondere kann ein als Alloy 625 oder unter Werkstoffnummer 2.4856 bekannter Stahl verwendet werden. Die genannten Materialien können auch untereinander und/oder mit anderen Materialien kombiniert werden.

Das Trägermedium kann insbesondere eine Mehrzahl von Poren aufweisen, wobei die Opferschicht ganz oder teilweise in den Poren enthalten ist. Dadurch kann eine besonders große Oberfläche für die Opferschicht erreicht werden, was eine besonders gute Messung der Sulfatierungsleistung erlaubt. Beispielsweise kann das Trägermedium als poröser Körper, insbesondere als poröser keramischer Körper ausgebildet sein. Dadurch können eine Vielzahl von Poren und eine entsprechend große Oberfläche realisiert werden. Die Poren sollten dabei bevorzugt alle oder zumindest überwiegend eine gasdurchlässige Verbindung zur Umgebung der Sonde aufweisen.

Das Trägermedium kann gemäß einer Ausführung einen porösen Bereich aufweisen, in welchem die Poren oder zumindest ein Teil der Poren angeordnet sind. Dieser poröse Bereich kann insbesondere außenseitig an dem Trägermedium angeordnet sein. Die Poren können insbesondere alle oder zumindest teilweise, vorzugsweise überwiegend, fluidisch mit einer Umgebung des Trägermediums verbunden sein, so dass Rauchgas, welches die Sonde umgibt, in die Poren eindringen kann. Ein poröser Bereich kann beispielsweise schwammartig ausgebildet sein.

Gemäß vorteilhaften Ausführungen können einige oder alle Poren einen Durchmesser von mindestens 50 µm, mindestens 100 µm oder mindestens 150 µm aufweisen. Gemäß vorteilhaften Ausführungen können einige oder alle Poren einen Durchmesser von höchstens 150 µm, höchstens 200 µm oder höchstens 300 µm aufweisen. Derartige Durchmesser haben sich für typische Anwendungen als vorteilhaft herausgestellt, da sie die Aufbringung eines Opfermaterials innerhalb der Poren ermöglichen und einen guten Gasaustausch zwischen den Poren ermöglichen.

Gemäß vorteilhaften Ausführungen kann die Opferschicht ganz oder teilweise eine Dicke von mindestens 5 µm, mindestens 10 µm oder mindestens 15 µm aufweisen. Gemäß vorteilhaften Ausführungen kann die Opferschicht ganz oder teilweise eine Dicke von höchstens 15 µm, höchstens 20 µm oder höchstens 30 µm aufweisen. Derartige Dicken oder Dickenbereiche haben sich als vorteilhaft erwiesen. Beispielsweise kann eine solche Dicke eine Sulfatierung der Opferschicht durch vorbeiströmendes Rauchgas ermöglichen, ohne dass mit einer Abschirmung tieferliegender Bereiche zu rechnen ist. Das vorhandene Opfermaterial kann somit ideal ausgenutzt werden.

Eine Dicke der Opferschicht kann beispielsweise 1 µm, 2 µm, 3 µm, 4 µm, 5 µm, 6 µm, 7 µm, 8 µm, 9 µm, 10 µm, 20 µm, 25 µm oder 30 µm betragen. Sie kann auch aus einem Intervall ausgewählt sein, dessen untere Grenze 1 µm , 2 µm , 3 µm , 4 µm, 5 µm, 6 µm, 7 µm, 8 µm, 9 µm, 10 µm, 15 µm, 20 µm oder 25 µm beträgt und dessen obere Grenze 2 µm, 3 µm, 4 µm, 5 µm, 6 µm, 7 µm, 8 µm, 9 µm, 10 µm, 20 µm, 25 µm oder 30 µm beträgt. Jede angegebene untere Grenze kann mit jeder größeren angegebenen oberen Grenze kombiniert werden, um ein Intervall zu bilden. Derartige Schichtdicken haben sich als vorteilhaft erwiesen.

Die Opferschicht kann gemäß einer Ausführung durch vollständiges oder teilweises Eintauchen des Trägermediums in eine gesättigte Halogensalzlösung ausgebildet sein. Dies ermöglicht eine einfache Herstellung und eine zuverlässige Bedeckung der relevanten Oberfläche mit der Opferschicht. Die Halogensalzlösung kann alternativ beispielsweise auch nicht gesättigt sein. Auch andere Herstellungsverfahren können verwendet werden, beispielsweise kann das Opfermaterial gepresst werden, beispielsweise in Tablettenform, oder das Opfermaterial kann durch Beschichtungsverfahren aufgebracht werden und/oder mit einer Halterung befestigt werden.

Das Trägermedium und/oder die Befestigungseinrichtung können vorteilhaft durch 3D-Druck ausgebildet sein. Die Verwendung von 3D-Druck zur Herstellung erlaubt eine besonders hohe Variabilität. Insbesondere können auch die bereits erwähnten Poren durch 3D-Druck ausgebildet werden. Dies erlaubt eine einfache, exakte und reproduzierbare Ausbildung der Poren.

Die Sonde kann gemäß einer vorteilhaften Ausführung einen Hohlraum mit einem Einlass für Luft oder ein anderes Medium zum Kühlen oder Temperieren der Sonde aufweisen. Damit kann die Sonde aktiv gekühlt werden. Dadurch kann die Opferschicht beispielsweise auf eine Temperatur unterhalb der Rauchgastemperatur gekühlt werden, so dass eine Sublimation oder eine andere thermische Beschädigung der Opferschicht, welche die Messung verfälschen würde, vermieden wird.

Gemäß einer vorteilhaften Ausführung weist die Sonde eine Abschattungseinheit auf, welche die Opferschicht zumindest teilweise umgibt. Dadurch kann anströmendes Rauchgas von der Sonde abgeschirmt werden. Die Abschattungseinrichtung kann insbesondere als Platte oder gebogenes Element, beispielsweise zylindersegmentförmiges Element ausgebildet sein. Das Rauchgas kann dann beispielsweise an der Abschattungseinheit vorbei strömen und über einen Pfad, welcher eine Richtungsänderung beinhaltet, zur Sonde strömen. Eine solche Richtungsänderung kann beispielsweise an einer Berandung der Abschattungseinheit erfolgen. Durch die Abschattungseinheit kann somit erreicht werden, dass die Sonde nicht direkt, sondern indirekt angeströmt wird, wodurch die kinetische Energie des auf die Sonde auftreffenden Rauchgases deutlich geringer ist. Beschädigungen der Opferschicht durch mechanische Einwirkung können dadurch vermieden werden. Außerdem kann erreicht werden, dass erheblich weniger Flugaschepartikel oder andere im Rauchgas mitfliegende Partikel auf die Opferschicht treffen. Derartige Partikel können zu einer Ausbildung einer Verkrustung oder einer sonstigen, die Opferschicht abschirmenden Lage führen.

Es sei erwähnt, dass die Sonde beispielsweise passiv gekühlt werden kann, was insbesondere aufgrund ohnehin unvermeidlicher Wärmeübertragung von der Sonde in die Kesselwand bzw. durch Kontakt mit der Kesselwand erfolgt. Es kann jedoch in der Sonde auch eine aktive Kühlung vorgesehen sein, beispielsweise indem ein Kanal zum Einleiten von Luft oder einem anderen Fluid vorgesehen ist, wobei ein solches Fluid zur Kühlung oder allgemein zur Temperierung verwendet werden kann. Dadurch kann eine definierte Temperatur eingestellt werden. Diese Temperatur kann beispielsweise mit dem weiter oben bereits erwähnten Thermoelement überwacht werden.

Hierin beschrieben ist des Weiteren eine Kesselanordnung. Die Kesselanordnung weist eine Kesselwand auf, welche einen Kessel umschließt. Die Kesselanordnung weist ferner eine Sonde wie hierin beschrieben auf, welche an der Kesselwand befestigt ist. Bezüglich der Sonde kann auf alle hierin beschriebenen Ausführungen und Varianten zurückgegriffen werden.

Es sei erwähnt, dass die Sonde beispielsweise in einem Feuerraum verwendet werden kann. Unter einem Feuerraum wird insbesondere ein Teil des Kessels, beispielsweise in der Rostfeuerung der erste Zug, verstanden. Die Sonde kann jedoch auch in anderen Teilen des Kessels verwendet werden. Der Begriff eines Kessels kann als rauchgasführenden Systems verallgemeinert werden. Die Kesselanordnung kann somit auch als Anordnung eines rauchgasführenden Systems bezeichnet werden.

Mittels der Kesselanordnung kann über die verwendete Sonde eine Sulfatierungsleistung an einer bestimmten Stelle bestimmt werden. In der Kesselanordnung kann beispielsweise eine Einrichtung zur gezielten Erzeugung von Schwefeltrioxid (SO₃) vorhanden sein, welche mittels der Sonde bewertet und optimiert werden kann.

Bevorzugt sind an der Kesselwand mehrere Sonden vorgesehen, so dass die Sulfatierungsleistung abhängig von einer jeweiligen Position ermittelt werden kann. Dies erlaubt eine ortsaufgelöste Ermittlung der Sulfatierungsleistung an unterschiedlichen Stellen im Kessel.

Die Kesselwand kann zumindest ein Loch aufweisen, durch welches ein vorstehender Stift der Sonde bzw. einer Befestigungseinrichtung der Sonde geführt ist. Dadurch kann die Sonde einfach und zuverlässig befestigt werden, wobei erwähnt sei, dass auch andere Befestigungsmöglichkeiten denkbar sind.

Der Stift kann das Loch insbesondere abdichten, wodurch insbesondere ein Austritt von Rauchgas durch das Loch auf einfache Weise verhindert wird. Der Stift kann insbesondere mittels eines Gegenhalters im Loch gehalten werden. Dies erlaubt eine einfache Befestigung. Der Gegenhalter kann beispielsweise keilförmig sein bzw. kann ein Keil sein oder kann an der Außenseite, also außerhalb des Kessels, mit dem Stift verschraubt sein.

Das Loch kann insbesondere in einem Steg zwischen zwei Rohren eines in der Kesselwand ausgebildeten Wärmetauschers bzw. in einer als Wärmetauscher fungierenden Kesselwand ausgebildet sein. Ein solcher Steg kann insbesondere Teil der Kesselwand bzw. des Wärmetauschers sein. An solchen Stegen sind in bestimmten Ausführungen ohnehin diverse Löcher vorhanden, welche beispielsweise zur Befestigung von Wärmeschutzplatten dienen können. Ein solches Loch kann nunmehr in einfacher Weise für eine Sonde verwendet werden. Dies hat insbesondere den Vorteil, dass die Messung der Sulfatierungsleistung in einfacher Weise an einer Stelle erfolgt, an welcher die Sulfatierungsleistung auch benötigt wird.

Anstelle eines Lochs in einem Steg kann jedoch beispielsweise auch eine Messöffnung, Revisionsöffnung oder ein Mannloch in einer Kesselwand verwendet werden. Hierbei kann es sich insbesondere um größere Öffnungen handeln, welche beispielsweise für Revisionszwecke einschließlich der Ermöglichung des Einstiegs von Personen ausgebildet sein können. Hierfür können beispielsweise Rohre eines Wärmetauschers so verbogen sein, dass die Öffnung dazwischen ausgebildet werden kann.

Ein Loch kann einen runden Querschnitt haben, kann jedoch auch einen anderen Querschnitt wie beispielsweise einen rechteckigen oder quadratischen Querschnitt haben.

Die Sonde kann bevorzugt im Bereich einer gecladdeten oder ungeschützten Membranwand eingesetzt werden.

Der Stift kann insbesondere konisch ausgeführt sein, wobei er sich zu einem Ende hin insbesondere verjüngen kann. Dadurch können ein Einführen des Stifts und eine Abdichtung eines Lochs vereinfacht werden.

Gemäß einer Ausführung steht von der Kesselwand ein Bolzen ab und greift zweckmäßig in eine Aufnahme der Sonde ein. Dadurch kann eine einfache Befestigung der Sonde durch Aufstecken auf den Bolzen erreicht werden. Auf die diesbezüglichen Ausführungen weiter oben sei verwiesen.

Die Kesselanordnung kann gemäß einer Ausführung eine Temperiervorrichtung zum Kühlen oder Temperieren der Sonde aufweisen. Eine solche Temperiervorrichtung kann insbesondere außerhalb des Kessels angeordnet sein. Typischerweise kommt sie nicht direkt mit dem Rauchgas in Kontakt.

Die Temperiervorrichtung kann insbesondere zum Zuleiten von Luft oder eines anderen Mediums in die Sonde ausgebildet sein. Beispielsweise kann die Temperiervorrichtung dazu ausgebildet sein, eine entsprechend temperierte, beispielsweise gekühlte, Luft, oder ein anderes temperiertes Medium bereitzustellen. Die Temperiervorrichtung kann hierzu beispielsweise als Wärmetauscher ausgebildet sein. Sie kann beispielsweise mit einem Reservoir zum Ableiten von Wärme thermisch verbunden sein.

Die Sonde kann gemäß einer Ausführung eine Abschattungseinrichtung bzw. Abschattungseinheit aufweisen, welche die Opferschicht gegenüber anströmendem Rauchgas zumindest partiell abschattet. Auch eine vollständige Abschattung ist möglich. Die Abschattungseinrichtung kann insbesondere als Platte oder gebogenes Element, beispielsweise zylindersegmentförmiges Element, ausgebildet sein. Somit kann anströmendes Rauchgas daran gehindert werden, unmittelbar auf die Sonde zu treffen. Auf die diesbezüglichen Ausführungen weiter oben sei verwiesen.

Die Kesselwand kann insbesondere eine Mehrzahl von Zügen des Kessels definieren. Derartige Züge können beispielsweise durch unterschiedliche Temperaturbereiche und/oder unterschiedliche Verläufe oder Querschnittsflächen definiert sein. In jedem Zug oder in zumindest einigen Zügen können jeweils eine Sonde oder mehrere Sonden angeordnet sein. Somit kann in unterschiedlichen Zügen die jeweilige Sulfatierungsleistung ermittelt werden, was einen besonders guten Rückschluss auf die Sulfatierungsleistung und die Effektivität eventueller Einrichtungen zum Erzeugen von Schwefeltrioxid erlaubt.

Die Erfindung betrifft ein Verfahren zum Ermitteln einer Sulfatierungsleistung in einem Rauchgas, wobei das Verfahren folgende Schritte aufweist:
- Einbringen einer Sonde wie hierin beschrieben in das Rauchgas,
- Belassen der Sonde in dem Rauchgas für einen vorbestimmten Zeitraum,
- Bestimmen einer Veränderung der Opferschicht, und
- Ermitteln der Sulfatierungsleistung basierend auf der Veränderung.

Dadurch kann in einfacher Weise eine Sulfatierungsleistung ermittelt werden, wobei die bereits beschriebene Sonde bestimmungsgemäß verwendet wird. Bezüglich der Sonde kann dabei auf alle hierin beschriebenen Ausführungen und Varianten zurückgegriffen werden.

Die Veränderung kann insbesondere eine chemische Reaktion während des Betriebs sein.

Der vorbestimmte Zeitraum kann beispielsweise in einem Intervall liegen, dessen untere Grenze eine Minute, zwei Minuten, fünf Minuten, zehn Minuten, dreißig Minuten, eine Stunde, zwei Stunden, drei Stunden, vier Stunden, fünf Stunden, 10 Stunden, ein Tag, zwei Tage, drei Tage, vier Tage, fünf Tage, zehn Tage, zwei Wochen oder drei Wochen ist, und dessen obere Grenze zwei Minuten, fünf Minuten, zehn Minuten, dreißig Minuten, eine Stunde, zwei Stunden, drei Stunden, vier Stunden, fünf Stunden, zehn Stunden, ein Tag, zwei Tage, drei Tage, vier Tage, fünf Tage, zehn Tage, zwei Wochen, drei Wochen oder vier Wochen ist. Jede angegebene untere Grenze kann mit jeder größeren angegebenen oberen Grenze kombiniert werden, um ein Intervall zu bilden. Derartige Zeiten haben sich bei typischen Sulfatierungsleistungen als vernünftig erwiesen, um die Sulfatierungsleistung bestimmen zu können. Insbesondere kann der Zeitraum zwischen einigen Minuten und wenigen Stunden betragen. Auch andere Zeiträume sind jedoch möglich.

Vor dem Bestimmen einer Veränderung der Opferschicht kann die Sonde insbesondere aus dem Rauchgas entnommen werden. Beispielsweise kann sie aus einem Kessel entnommen werden, in welchem das Rauchgas geführt wird. Die Bestimmung der Veränderung erfolgt zweckmäßig erst nach Ablauf des vorbestimmten Zeitraums.

Das Verfahren kann insbesondere in einer hierin beschriebenen Kesselanordnung durchgeführt werden. Bezüglich der Kesselanordnung kann auf alle hierin beschriebenen Ausführungen und Varianten zurückgegriffen werden.

Beim Bestimmen einer Veränderung der Opferschicht kann insbesondere eine Menge von Halogensalz und/oder von in dem Halogensalz enthaltenen Kationen bestimmt werden, welche nach dem Belassen der Sonde in dem Rauchgas noch vorhanden ist. Diese Menge kann insbesondere mit einer Menge an Halogensalz und/oder von in dem Halogensalz enthaltenen Kationen in der Opferschicht vor dem Einbringen der Sonde in das Rauchgas verglichen werden. Dadurch kann ermittelt werden, wie viel des ursprünglich vorhandenen Halogensalzes nach dem Belassen der Probe im Rauchgas noch vorhanden ist. Je weniger des ursprünglich vorhandenen Halogensalzes am Schluss noch vorhanden ist, desto höher ist typischerweise die Sulfatierungsleistung. Das Halogensalz wird dabei als Kombination aus Kationen und Anionen betrachtet, wobei bei der Reaktion typischerweise das Kation erhalten bleibt, wie bereits erwähnt. Beispielsweise kann ursprünglich vorhandenes Strontiumchlorid in Strontiumsulfat umgewandelt werden.

Es kann insbesondere in einem Lösungsmittel, beispielsweise Wasser, lösliches Halogensalz als Opfermaterial verwendet werden. Die Menge von Halogensalz und/oder von in dem Halogensalz enthaltenen Kationen, welche nach dem Belassen der Sonde in dem Rauchgas noch vorhanden ist, kann insbesondere durch Auflösen der Opferschicht in dem Lösungsmittel bestimmt werden.

Durch ein solches Auflösen kann eine besonders einfache Verfahrensführung erreicht werden. Beispielsweise kann die Menge an noch vorhandenem Halogensalz und/oder von in dem Halogensalz enthaltenen Kationen bzw. eine in dem Lösungsmittel gelöste Menge von Halogensalz und/oder von in dem Halogensalz enthaltenen Kationen nasschemisch oder spektroskopisch bestimmt werden. Beispielsweise kann hierfür eine Titration verwendet werden. Derartige Verfahren sind typischerweise auch vor Ort, d.h. in Räumlichkeiten von Kraftwerken oder Müllverbrennungsanlagen, mit einfachen Mitteln durchführbar. Dies vermeidet es, dass eine Sonde zunächst in ein Labor verbracht werden muss, um eine Auswertung vorzunehmen. Insbesondere kann nach dem Auflösen eine Menge des Kations oder der Kationen des Halogensalzes bestimmt werden. Dies gibt einen Rückschluss auf die tatsächlich vorhandene Menge an Halogensalz und ist typischerweise die interessierende Größe.

Es sei jedoch verstanden, dass die Menge von Halogensalz und/oder von in dem Halogensalz enthaltenen Kationen nach dem Belassen der Sonde im Rauchgas auch anderweitig bestimmt werden kann, beispielsweise durch visuelle Beobachtung, Messen einer Gewichtsveränderung oder durch Abkratzen von vorhandenen Bestandteilen der Opferschicht.

Beim Bestimmen einer Veränderung der Opferschicht kann insbesondere eine Menge von Sulfat und/oder von in dem Sulfat enthaltenen Kationen bestimmt werden, welche nach dem Belassen der Sonde in dem Rauchgas in der Opferschicht vorhanden ist. Dieses Sulfat wurde aus dem Halogensalz durch Reaktion mit Schwefeltrioxid gebildet und bildet somit auch einen Indikator für die Sulfatierungsleistung. Je mehr Sulfat gebildet wurde in einem bestimmten Zeitraum, desto höher ist die Sulfatierungsleistung.

Die Menge von Sulfat und/oder von in dem Sulfat enthaltenen Kationen kann insbesondere durch Auflösen der Opferschicht in einem weiteren Lösungsmittel bestimmt werden. Hierfür wird typischerweise ein Lösungsmittel verwendet, in welchem das Sulfat gut löslich ist. Beispielsweise kann hierfür Salzsäure, Königswasser, Salpetersäure, Schwefelsäure, Flusssäure oder eine andere starke Säure verwendet werden. Zusätzlich kann beispielsweise mechanischer Druck ausgeübt werden und/oder es können mechanische Zerkleinerungsverfahren angewendet werden, um eine gute Lösung zu erreichen.

Die Opferschicht wird vorzugsweise in dem weiteren Lösungsmittel erst gelöst, nachdem Halogensalz aus der Opferschicht entfernt wurde, beispielsweise durch das bereits beschriebene Auflösen in dem Lösungsmittel, in dem das Halogensalz löslich ist. Dadurch werden Verfälschungen der Messergebnisse vermieden.

Insbesondere kann somit eine sequentielle Elution durchgeführt werden. Die Opferschicht kann hierbei beispielsweise zunächst in Wasser, oder einem anderen Lösungsmittel, aufgelöst werden, wobei dann die Menge von gelöstem Halogensalz und/oder von in dem Halogensalz enthaltenen Kationen im Lösungsmittel bestimmt wird. Anschließend kann der verbleibende Teil in Salzsäure, oder einem anderen Lösungsmittel, aufgelöst werden, wobei dann die Menge von im Lösungsmittel gelöstem Sulfat und/oder von in dem Sulfat enthaltenen Kationen bestimmt wird. Auch letzteres kann beispielsweise durch nasschemische oder spektroskopische Methoden, beispielsweise durch Titration, erfolgen. Unter dem Sulfat ist hier insbesondere das komplette Salz, also mit Kationen und Anionen, zu verstehen. Es sei erwähnt, dass die Menge an Anionen hier typischerweise nicht interessant ist, jedoch die Menge an vorhandenen Kationen. Insbesondere wird somit das aus dem Opfermaterial durch Reaktion gebildete Sulfat betrachtet.

Vorteilhaft kann eine Summe gebildet werden aus der Menge eines oder mehrerer Typen von Kationen oder Erdalkalimetallen in dem Halogensalz, welches nach dem Belassen der Sonde in dem Rauchgas noch vorhanden ist, und in dem Sulfat, welches nach dem Belassen der Sonde in dem Rauchgas in der Opferschicht vorhanden ist. Es wird also mit anderen Worten beispielsweise bestimmt, welche Stoffmenge eines oder mehrerer Typen von Kationen oder Erdalkalimetallen in dem Halogensalz nach Verbleib in dem Rauchgas noch vorhanden ist und welche Stoffmenge des Typs oder der Typen von Kationen oder Erdalkalimetallen in dem Sulfat vorhanden ist, welches während des Verbleibs im Rauchgas gebildet wurde. Diese Summe kann insbesondere mit einer Menge des Typs oder der mehreren Typen von Kationen oder Erdalkalimetallen in der Opferschicht vor dem Einbringen der Sonde in das Rauchgas verglichen werden. Bei idealer Prozessdurchführung sollten beide Werte gleich sein. Eine Abweichung kann darauf hinweisen, dass solche Kationen oder Erdalkalimetalle aus dem Rauchgas abgelagert wurden oder in das Rauchgas abgegeben wurden.

Gemäß einer Ausführung wird die Sonde gekühlt, während sie sich im Rauchgas befindet. Die Sonde kann insbesondere durch Einblasen von Luft gekühlt werden. Auch Wasser kann zur Kühlung verwendet werden. Dadurch kann eine thermische Beschädigung der Opferschicht, beispielsweise durch Sublimation, vermieden werden.

Vorteilhaft kann die Sonde im Rauchgas auf eine Temperatur von höchstens 700 °C, höchstens 600 °C oder höchstens 500 °C gekühlt werden. Dies hat sich für typische Materialien als sinnvoll erwiesen, um thermische Beschädigungen zu verhindern.

Weitere Merkmale und Vorteile wird der Fachmann den nachfolgend mit Bezug auf die beigefügte Zeichnung beschriebenen Ausführungsbeispielen entnehmen. Dabei zeigen:
Fig. 1: eine Sonde gemäß einem ersten Ausführungsbeispiel,
Fig. 2: eine Sonde gemäß einem zweiten Ausführungsbeispiel,
Fig. 3: eine Sonde gemäß einem dritten Ausführungsbeispiel,
Fig. 4: eine Kesselanordnung gemäß einem ersten Ausführungsbeispiel,
Fig. 5: eine Kesselanordnung gemäß einem zweiten Ausführungsbeispiel,
Fig. 6: eine Kesselanordnung gemäß einem dritten Ausführungsbeispiel, und
Fig. 7: eine Kesselanordnung gemäß einem vierten Ausführungsbeispiel.

Mit den beschriebenen Sonden und Kesselanordnungen kann das erfindungsgemäße Verfahren vorteilhaft durchgeführt werden.

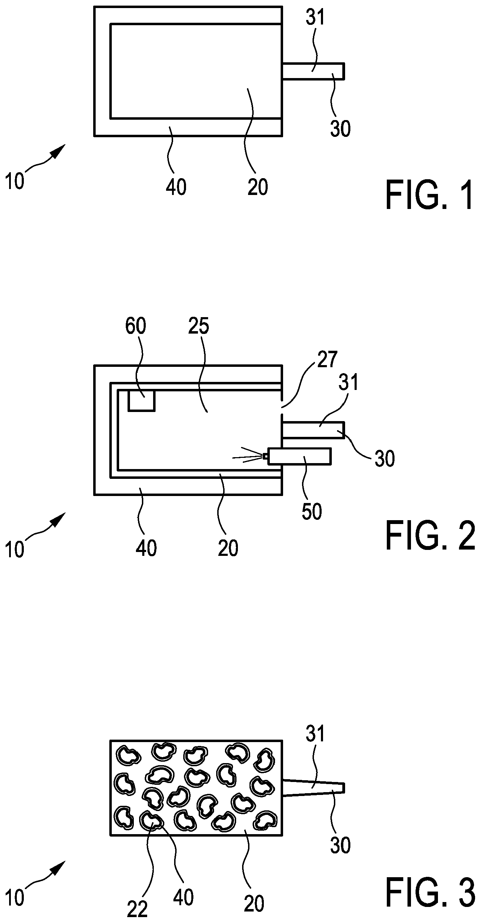

Fig. 1 zeigt schematisch eine Sonde 10 gemäß einem ersten Ausführungsbeispiel. Diese ist besonders einfach aufgebaut.

Die Sonde 10 weist ein Trägermedium 20 auf, welches vorliegend aus Chrom-Nickel-Stahl ausgebildet ist. An der Sonde 10 ist eine Befestigungseinrichtung 30 angeordnet, welche vorliegend als einfacher Stift 31 ausgeführt ist. Dieser Stift 31 kann beispielsweise in ein Loch einer Kesselwand gesteckt werden, um die Sonde 10 dort zu befestigen, insbesondere derart, dass die Sonde 10 in einer Kesselinnenseite angeordnet ist.

Außenseitig auf dem Trägermedium 20 ist eine Opferschicht 40 ausgebildet. Die Opferschicht 40 ist vorliegend identisch zu einem Opfermaterial, welches ein Halogensalz ist. Beispielsweise kann hierfür Strontiumchlorid oder Bariumchlorid verwendet werden oder auch eine Kombination unterschiedlicher Halogensalze.

Die Sonde 10 kann einfach in ein Rauchgas, insbesondere in einen ein solches Rauchgas führenden Kessel, eingebracht werden, und kann dort für eine vordefinierte Zeit belassen werden. Dadurch ist die Opferschicht 40 dem Rauchgas unmittelbar ausgesetzt. Die Menge an Opfermaterial vor dem Einbringen in das Rauchgas ist aufgrund der Herstellungsbedingungen bekannt. Nach einer vorbestimmten Zeit kann die Sonde 10 wieder aus dem Rauchgas entnommen werden und die noch verbliebene Menge an Opfermaterial kann bestimmt werden. Hierzu kann das Halogensalz beispielsweise in einem Lösungsmittel wie Wasser aufgelöst werden und die noch verbliebene Menge kann nasschemisch oder spektroskopisch bestimmt werden. Auch andere Auswerteverfahren sind jedoch möglich.

Fig. 2 zeigt eine Sonde 10 gemäß einem zweiten Ausführungsbeispiel. Diese ist ähnlich zum ersten Ausführungsbeispiel aufgebaut, jedoch ist das Trägermedium 20 innen hohl ausgebildet, so dass ein Hohlraum 25 entsteht. In den Hohlraum 25 mündet eine Düse 50, und der Hohlraum 25 weist ferner eine Auslassöffnung 27 auf. Dadurch ist das Einblasen von Luft oder einem anderen Fluid über die Düse 50 in den Hohlraum 25 möglich, und das Fluid kann über die Auslassöffnung 27 wieder austreten. Dies ermöglicht eine gezielte Kühlung oder allgemein Temperierung der Sonde 10, so dass beispielsweise eine vorgegebene Temperatur gezielt eingestellt werden kann. Es kann auch sichergestellt werden, dass eine Temperatur, bei der das Opfermaterial sich schon aufgrund der Temperatur verflüchtigen würde, nicht überschritten wird.

Zur Messung der Temperatur weist die Sonde 10 gemäß dem zweiten Ausführungsbeispiel ferner ein Thermoelement 60 auf. Damit kann die Temperatur der Sonde 10 überwacht werden und es können gegebenenfalls Maßnahmen zum Erreichen der gewünschten Temperatur eingeleitet werden. Beispielsweise kann eine Kühlung bei drohendem Überschreiten einer vorgegebenen Maximaltemperatur aktiviert werden.

Fig. 3 zeigt eine Sonde 10 gemäß einem dritten Ausführungsbeispiel. Dabei ist das Trägermedium 20 porös ausgebildet, so dass eine Vielzahl von Poren 22 darin ausgebildet sind. In den Poren 22 befindet sich die Opferschicht 40 mit dem darin enthaltenen Opfermaterial, wobei die Opferschicht 40 insbesondere jeweilige Wandungen der Poren 22 bedeckt. Dadurch wird erreicht, dass eine besonders große Oberfläche zur Verfügung steht, welche mit der Opferschicht 40 bedeckt wird. Dies erlaubt eine besonders vorteilhafte und zuverlässige Ermittlung der Sulfatierungsleistung. Die Poren 22 werden dabei vom Rauchgas durchströmt.

Weiter ist bei der Ausführung gemäß Fig. 3 der Stift 31 der Befestigungseinrichtung 30 konisch ausgebildet, wobei er nach rechts verjüngend ausgebildet ist. Dies kann vorteilhaft sein, um ein Loch abzudichten, in welchem die Befestigungseinrichtung 30 befestigt werden soll.

Es sei verstanden, dass die jeweiligen Merkmale der Ausführungsbeispiele beliebig miteinander kombiniert werden können.

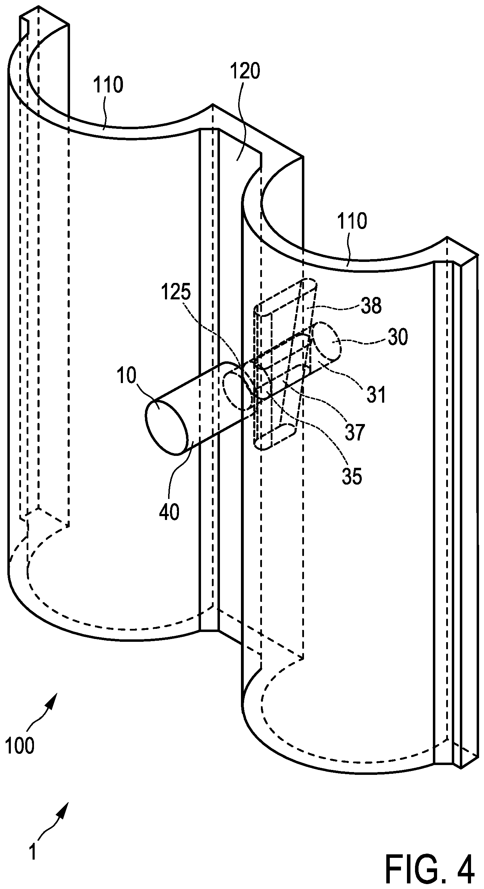

Fig. 4 zeigt einen Ausschnitt aus einer Kesselanordnung 1 gemäß einem ersten Ausführungsbeispiel. Die Kesselanordnung 1 weist eine Kesselwand 100 auf, welche einen ansonsten nicht weiter dargestellten Kessel umgibt.

In der Kesselwand 100 sind vorliegend zwei schematisch und nur teilweise dargestellte Rohre 110 ausgebildet, welche beispielsweise Teil eines Wärmetauschers sein können. Die Blickrichtung in Fig. 4 ist dabei von einer Innenseite des Kessels aus gesehen auf die Kesselwand 100. Zwischen den beiden Rohren 110 ist ein Steg 120 ausgebildet, welcher die beiden Rohre 110 verbindet.

In dem Steg 120 ist ein Loch 125 ausgebildet, welches zur Befestigung einer ebenfalls dargestellten Sonde 10 dient. Die Sonde 10 tritt dabei mit ihrer Befestigungseinrichtung 30 durch das Loch 125 hindurch. Die als Stift 31 ausgebildete Befestigungseinrichtung 30 hat dabei einen Durchdringungsabschnitt 35, welcher sich innerhalb des Lochs 125 befindet.

Außenseitig weist bei dem gezeigten Ausführungsbeispiel die Befestigungseinrichtung 30 ein konisches Langloch 37 auf. Durch dieses ist ein Gegenhalter in Form eines Keils 38 durchgeführt, so dass die Sonde 10 damit verklemmt und befestigt werden kann. Dies ermöglicht eine einfache und zuverlässige Befestigung der Sonde 10 und auch ein einfaches Lösen, da sich der Keil 38 außerhalb einer Rauchgasatmosphäre befindet und somit nicht korrodiert. Durch eine solche Ausführung kann das Loch 125 auch abgedichtet werden, was ein Ausdringen von Rauchgas verhindert.

Die Sonde 10 befindet sich dabei so an der Kesselwand 100, dass die Opferschicht 40 vom Rauchgas umströmt wird und dementsprechend einer Sulfatierungsleistung des Rauchgases ausgesetzt ist. Dies ermöglicht eine zuverlässige Bestimmung und Bewertung der Sulfatierungsleistung.

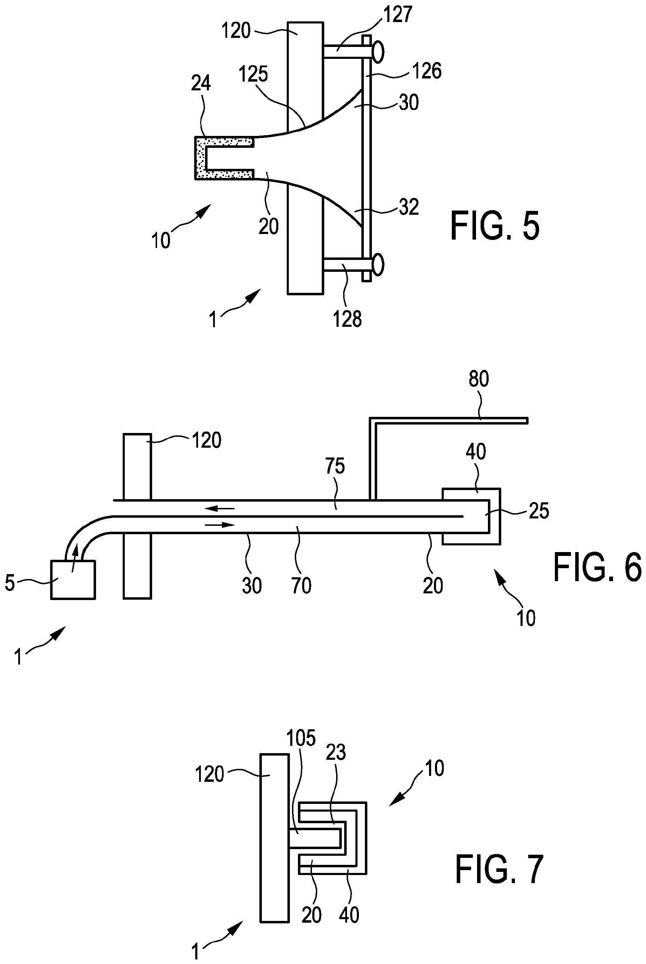

Fig. 5 zeigt in einem Ausschnitt eine Kesselanordnung 1 gemäß einem zweiten Ausführungsbeispiel.

Dabei ist eine Sonde 10 an einem Steg 120 angebracht, wobei die Sonde 10 jedoch anders ausgeführt ist als bei den bisherigen Ausführungen. Die Sonde 10 weist einen porösen Bereich 24 auf, in welchem vorliegend eine Vielzahl von Poren ausgebildet sind. Die Poren sind nicht mehr einzeln bezeichnet und dargestellt. Vielmehr handelt es sich vorliegend um einen schwammähnlichen Bereich, wobei sich die Opferschicht sowohl auf dessen Außenoberfläche wie auch in den jeweiligen Poren befindet. Die Poren sind miteinander fluidisch verbunden, so dass Rauchgas in die Poren eindringen kann. Dadurch wird insgesamt eine erheblich größere Oberfläche der Opferschicht erreicht, an welcher das Rauchgas die Opferschicht angreifen kann.

Das Trägermedium 20 ist vorliegend integral mit einem Befestigungsabschnitt 32 ausgebildet, welcher eine Befestigungseinrichtung 30 bildet. Der Befestigungsabschnitt 32 ist wie gezeigt mit einem konisch verlaufenden Außenquerschnitt versehen. Dessen Querschnittsfläche verringert sich zum porösen Bereich 24 hin. Das Loch 125 im Steg 120 ist ebenfalls konisch und komplementär zum Befestigungsabschnitt 32 ausgebildet. Der Befestigungsabschnitt 32 dichtet somit das Loch 125 ab, so dass kein Rauchgas austreten kann. Alternativ zum im Steg 120 ausgebildeten Loch 125 könnte beispielsweise auch eine Revisionsöffnung oder ein Mannloch in einer Kesselwand verwendet werden.

Auf der Außenseite, also gegenüberliegend zum rauchgasführenden Bereich und in Fig. 5 auf der rechten Seite, wird die Sonde 10 von einer Halteplatte 126 gehalten, die wiederum mit einer ersten Schraube 127 und einer zweiten Schraube 128 an dem Steg 120 befestig ist. Die Sonde 10 wird damit in das Loch 125 gedrückt. Eine solche Art der Befestigung ist sehr einfach zu realisieren und auch einfach wieder zu lösen. Durch Lösen der Schrauben 127, 128 kann die Sonde 10 von außerhalb wieder entfernt werden. Eine Begehung des Kessels ist hierzu nicht erforderlich.

Fig. 6 zeigt in einem Ausschnitt eine Kesselanordnung 1 gemäß einem dritten Ausführungsbeispiel. Dabei wird eine Sonde 10 verwendet, deren Befestigungseinrichtung 30 rohrförmig ausgebildet ist. Die Befestigungseinrichtung 30 ist dabei in dem Steg 120 aufgenommen.

Am in Fig. 6 rechten Ende ist außenseitig die Opferschicht 40 aufgebracht. Innerhalb der Sonde 10 ist ein Hohlraum 25 ausgebildet. Zu diesem führen ein erster Kanal 70 und ein zweiter Kanal 75. Der erste Kanal 70 ist dabei an einer Temperiervorrichtung 5 angeschlossen. Diese ist dazu ausgebildet, kühle Luft in den ersten Kanal 70 einzuleiten. Durch den ersten Kanal 70 gelangt die kühle Luft in den Hohlraum 25 und kühlt dort die Sonde 10 direkt unterhalb der Opferschicht 40. Diese wird dadurch auf eine Temperatur unterhalb der Rauchgastemperatur gekühlt. Durch den zweiten Kanal 75 kann die Luft wieder aus der Sonde 10 entweichen.

Bei der in Fig. 6 dargestellten Ausführung ist auch eine Abschattungseinheit 80 vorhanden, welche die Sonde 10 gegenüber anströmendem Rauchgas partiell abschirmt. Dadurch wird eine Überfrachtung oder Beschädigung der Sonde 10 durch unmittelbar auftreffende Partikel des Rauchgases verhindert. Die Sonde 10 wird indirekt angeströmt, wodurch sie nach wie vor mit dem Rauchgas in Kontakt ist und die gewünschte Funktion erzielen kann. Die Abschattungseinheit 80 kann insbesondere auch bei anderen Ausführungsbeispielen verwendet werden.

Es sei erwähnt, dass beispielsweise ein poröses Material auf das Trägermedium 20 aufgebracht werden kann, und in diesem die Opferschicht 40 enthalten sein kann. Hierzu sei auf die an anderer Stelle gegebene Beschreibung einer Ausführung mit Poren verwiesen. Der in Fig. 6 mit Bezugszeichen 40 bezeichnete Bereich kann also beispielsweise ein poröses Material, beispielsweise ein schwammartiges Material, mit eingebrachter Opferschicht sein.

Fig. 7 zeigt in einem Ausschnitt eine Kesselanordnung 1 gemäß einem vierten Ausführungsbeispiel. Dabei wird eine Sonde 10 verwendet, in deren Trägermedium 20 eine Aufnahme 23 ausgebildet ist. In dieser Aufnahme 23 greift ein Bolzen 105 ein, welcher direkt an dem Steg 120 befestigt ist. Außenseitig ist eine Opferschicht 40 aufgebracht. Anstelle eines Bolzens 105 könnte alternativ beispielsweise auch ein Träger verwendet werden, welcher beispielsweise einen größeren Abstand zum Steg 120 oder allgemeiner zur Kesselwand 100 herstellen kann. Auch im Fall der Ausführung von Fig. 7 kann ein poröses Material verwendet werden, in welchem die Opferschicht 40 enthalten ist.

Eine solche Ausführung ermöglicht es, dass die Sonde 10 einfach auf einen vorhandenen Bolzen 105 aufgesetzt wird. Ein solcher Bolzen 105 kann beispielsweise an dem Steg 120 angeschweißt oder anderweitig befestigt sein. Das Aufstecken und ein Entfernen der Sonde 10 kann insbesondere während einer Revision ausgeführt werden, in welcher ein Kessel von innen begehbar ist.

## Patentansprüche

1. Verfahren zum Ermitteln einer Sulfatierungsleistung in einem Rauchgas, wobei das Verfahren folgende Schritte aufweist:
- Einbringen einer Sonde (10) in das Rauchgas, wobei die Sonde (10) folgendes aufweist:
- ein Trägermedium (20), welches an einer Kesselwand (100) befestigbar ist, und
- eine Opferschicht (40), welche auf dem Trägermedium (20) außenseitig angeordnet ist und welche ein Opfermaterial aus einem Halogensalz enthält,
- Belassen der Sonde (10) in dem Rauchgas für einen vorbestimmten Zeitraum,
- Bestimmen einer Veränderung der Opferschicht (40), und
- Ermitteln der Sulfatierungsleistung basierend auf der Veränderung.

2. Verfahren nach Anspruch 1,
- wobei das Halogensalz Strontiumchlorid oder Bariumchlorid ist.

3. Verfahren nach einem der Ansprüche 1 oder 2,
- wobei die Opferschicht (40) vollständig aus dem Opfermaterial besteht.

4. Verfahren nach einem der vorhergehenden Ansprüche,
- wobei das Verfahren in einer Kesselanordnung (1) durchgeführt wird, welche folgendes aufweist:
- eine Kesselwand (100), welche einen Kessel umschließt, und
- die Sonde (10), welche an der Kesselwand (100) befestigt ist.

5. Verfahren nach einem der vorhergehenden Ansprüche,
- wobei beim Bestimmen einer Veränderung der Opferschicht (40) eine Menge von Halogensalz und/oder von in dem Halogensalz enthaltenen Kationen bestimmt wird, welche nach dem Belassen der Sonde (10) in dem Rauchgas noch vorhanden ist.

6. Verfahren nach Anspruch 5,
- wobei die Menge von Halogensalz und/oder von in dem Halogensalz enthaltenen Kationen, welche nach dem Belassen der Sonde (10) in dem Rauchgas noch vorhanden ist, mit einer Menge an Halogensalz und/oder von in dem Halogensalz enthaltenen Kationen in der Opferschicht (40) vor dem Einbringen der Sonde (10) in das Rauchgas verglichen wird.

7. Verfahren nach einem der Ansprüche 5 oder 6,
- wobei ein in einem Lösungsmittel lösliches Halogensalz als Opfermaterial verwendet wird, und
- wobei die Menge von Halogensalz und/oder von in dem Halogensalz enthaltenen Kationen, welche nach dem Belassen der Sonde (10) in dem Rauchgas noch vorhanden ist, durch Auflösen der Opferschicht (40) in dem Lösungsmittel bestimmt wird.

8. Verfahren nach Anspruch 7,
- wobei eine in dem Lösungsmittel gelöste Menge von Halogensalz und/oder von in dem Halogensalz enthaltenen Kationen spektroskopisch oder durch Titration bestimmt wird.

9. Verfahren nach einem der vorhergehenden Ansprüche,
- wobei beim Bestimmen einer Veränderung der Opferschicht (40) eine Menge von Sulfat und/oder von in dem Sulfat enthaltenen Kationen bestimmt wird, welche nach dem Belassen der Sonde (10) in dem Rauchgas in der Opferschicht (40) vorhanden ist.

10. Verfahren nach Anspruch 9,
- wobei die Menge von Sulfat und/oder von in dem Sulfat enthaltenen Kationen durch Auflösen der Opferschicht (40) in einem weiteren Lösungsmittel bestimmt wird.

11. Verfahren nach Anspruch 10,
- wobei die Opferschicht (40) in dem weiteren Lösungsmittel erst gelöst wird, nachdem Halogensalz aus der Opferschicht (40) entfernt wurde.

12. Verfahren nach einem der vorhergehenden Ansprüche,
- wobei eine Summe gebildet wird aus der Menge eines oder mehrerer Typen von Kationen oder Erdalkalimetallen in dem Halogensalz, welches nach dem Belassen der Sonde (10) in dem Rauchgas noch vorhanden ist, und in dem Sulfat, welches nach dem Belassen der Sonde (10) in dem Rauchgas in der Opferschicht (40) vorhanden ist, und
- wobei diese Summe mit einer Menge des Typs oder der mehreren Typen von Kationen oder Erdalkalimetallen in der Opferschicht (40) vor dem Einbringen der Sonde (10) in das Rauchgas verglichen wird.

13. Verfahren nach einem der vorhergehenden Ansprüche,
- wobei die Sonde (10) gekühlt wird, während sie sich im Rauchgas befindet.

14. Verfahren nach Anspruch 13,
- wobei die Sonde (10) durch Einblasen von Luft gekühlt wird.

15. Verfahren nach einem der Ansprüche 13 oder 14,
- wobei die Sonde (10) im Rauchgas auf eine Temperatur von höchstens 700 °C, höchstens 600 °C oder höchstens 500 °C gekühlt wird.

## Claims

1. Method for determining a sulfation power in a flue gas, wherein the method comprises the steps of:
- introducing a probe (10) into the flue gas, wherein the probe (10) comprises the following:
- a carrier medium (20) which is securable to a vessel wall (100) and
- a sacrificial layer (40) which is arranged on the outside of the carrier medium (20) and which contains a sacrificial material composed of a halogen salt,
- leaving the probe (10) in the flue gas for a predetermined period,
- determining a change in the sacrificial layer (40) and
- determining the sulfation power based on the change.

2. Method according to Claim 1,
- wherein the halogen salt is strontium chloride or barium chloride.

3. Method according to either of Claims 1 or 2,
- wherein the sacrificial layer (40) is composed entirely of the sacrificial material.

4. Method according to any of the preceding Claims,
- wherein the method is performed in a vessel assembly (1) which comprises the following:
- a vessel wall (100) which encloses a vessel and
- the probe (10) which is secured to the vessel wall (100) .

5. Method according to any of the preceding Claims,
- wherein determining a change in the sacrificial layer (40) comprises determining an amount of halogen salt and/or of cations present in the halogen salt which remains present after leaving the probe (10) in the flue gas.

6. Method according to Claim 5,
- wherein the amount of halogen salt and/or of cations present in the halogen salt which remains present after leaving the probe (10) in the flue gas is compared with an amount of halogen salt and/or of cations present in the halogen salt in the sacrificial layer (40) before introducing the probe (10) into the flue gas.

7. Method according to either of Claims 5 or 6,
- wherein a halogen salt soluble in a solvent is used as sacrificial material and
- wherein the amount of halogen salt and/or of cations present in the halogen salt which remains present after leaving the probe (10) in the flue gas is determined by dissolving the sacrificial layer (40) in the solvent.

8. Method according to Claim 7,
- wherein an amount of halogen salt and/or of cations present in the halogen salt dissolved in the solvent is determined spectroscopically or by titration.

9. Method according to any of the preceding Claims,
- wherein determining a change in the sacrificial layer (40) comprises determining an amount of sulfate and/or of cations present in the sulfate which remains present in the sacrificial layer (40) after leaving the probe (10) in the flue gas.

10. Method according to Claim 9,
- wherein the amount of sulfate and/or of cations present in the sulfate is determined by dissolving the sacrificial layer (40) in a further solvent.

11. Method according to Claim 10,
- wherein the sacrificial layer (40) is only dissolved in the further solvent once halogen salt has been removed from the sacrificial layer (40).

12. Method according to any of the preceding Claims,
- wherein a sum is formed from the amount of one or more types of cations or alkaline earth metals in the halogen salt which remains present after leaving the probe (10) in the flue gas and in the sulfate which is present in the sacrificial layer (40) after leaving the probe (10) in the flue gas and
- wherein this sum is compared with an amount of the type or the types of cations or alkaline earth metals in the sacrificial layer (40) before introducing the probe (10) into the flue gas.

13. Method according to any of the preceding Claims,
- wherein the probe (10) is cooled while it is in the flue gas.

14. Method according to Claim 13,
- wherein the probe (10) is cooled by injection of air.

15. Method according to either of Claims 13 or 14,
- wherein the probe (10) in the flue gas is cooled to a temperature of at most 700°C, at most 600°C or at most 500°C.

## Revendications

1. Procédé de détermination d'une performance de sulfatation dans un gaz de combustion, le procédé présentant les étapes suivantes consistant à :
- introduire une sonde (10) dans le gaz de combustion, la sonde (10) présentant les éléments suivants :
- un milieu de support (20), qui peut être fixé à une paroi de chaudière (100), et
- une couche sacrificielle (40), qui est agencée extérieurement sur le milieu de support (20) et qui contient un matériau sacrificiel composé d'un sel d'halogène,
- laisser la sonde (10) dans le gaz de combustion pendant une période de temps prédéterminée,
- déterminer une modification de la couche sacrificielle (40), et
- déterminer la performance de sulfatation sur la base de la modification.

2. Procédé selon la revendication 1,
- dans lequel le sel d'halogène est le chlorure de strontium ou le chlorure de baryum.

3. Procédé selon l'une quelconque des revendications 1 ou 2,
- dans lequel la couche sacrificielle (40) est entièrement constituée du matériau sacrificiel.

4. Procédé selon l'une quelconque des revendications précédentes,
- dans lequel le procédé est mis en œuvre dans un agencement de chaudière (1), qui présente les éléments suivants :
- une paroi de chaudière (100), qui renferme une chaudière, et
- la sonde (10), qui est fixée à la paroi de chaudière (100).

5. Procédé selon l'une quelconque des revendications précédentes,
- dans lequel, lors de la détermination d'une modification de la couche sacrificielle (40), on détermine une quantité de sel d'halogène et/ou de cations contenus dans le sel d'halogène qui est encore présente après avoir laissé la sonde (10) dans le gaz de combustion.

6. Procédé selon la revendication 5,
- dans lequel la quantité de sel d'halogène et/ou de cations contenus dans le sel d'halogène qui est encore présente après avoir laissé la sonde (10) dans le gaz de combustion est comparée à une quantité de sel d'halogène et/ou de cations contenus dans le sel d'halogène dans la couche sacrificielle (40) avant l'introduction de la sonde (10) dans le gaz de combustion.

7. Procédé selon l'une quelconque des revendications 5 ou 6,
- dans lequel un sel d'halogène soluble dans un solvant est utilisé en tant que matériau sacrificiel, et
- dans lequel la quantité de sel d'halogène et/ou de cations contenus dans le sel d'halogène qui est encore présente après avoir laissé la sonde (10) dans le gaz de combustion est déterminée par dissolution de la couche sacrificielle (40) dans le solvant.

8. Procédé selon la revendication 7,
- dans lequel une quantité de sel d'halogène et/ou de cations contenus dans le sel d'halogène dissoute dans le solvant est déterminée par spectroscopie ou par titrage.

9. Procédé selon l'une quelconque des revendications précédentes,
- dans lequel, lors de la détermination d'une modification de la couche sacrificielle (40), on détermine une quantité de sulfate et/ou de cations contenus dans le sulfate qui est présente dans la couche sacrificielle (40) après avoir laissé la sonde (10) dans le gaz de combustion.

10. Procédé selon la revendication 9,
- dans lequel la quantité de sulfate et/ou de cations contenus dans le sulfate est déterminée par dissolution de la couche sacrificielle (40) dans un autre solvant.

11. Procédé selon la revendication 10,
- dans lequel la couche sacrificielle (40) est dissoute dans l'autre solvant seulement après que le sel d'halogène a été éliminé de la couche sacrificielle (40).

12. Procédé selon l'une quelconque des revendications précédentes,
- dans lequel une somme est formée à partir de la quantité d'un ou de plusieurs types de cations ou de métaux alcalino-terreux dans le sel d'halogène qui est encore présente après avoir laissé la sonde (10) dans le gaz de combustion et dans le sulfate qui est présent dans la couche sacrificielle (40) après avoir laissé la sonde (10) dans le gaz de combustion, et
- dans lequel cette somme est comparée à une quantité du type ou des plusieurs types de cations ou de métaux alcalino-terreux dans la couche sacrificielle (40) avant l'introduction de la sonde (10) dans le gaz de combustion.

13. Procédé selon l'une quelconque des revendications précédentes,
- dans lequel la sonde (10) est refroidie pendant qu'elle se trouve dans le gaz de combustion.

14. Procédé selon la revendication 13,
- dans lequel la sonde (10) est refroidie par injection d'air.

15. Procédé selon l'une quelconque des revendications 13 ou 14,
- dans lequel la sonde (10) est refroidie dans le gaz de combustion à une température d'au plus 700 °C, d'au plus 600 °C ou d'au plus 500 °C.
